# EUROPÄISCHE PATENTSCHRIFT

(11) **EP 0 747 310 B1**
(45) Veröffentlichungstag und Bekanntmachung des Hinweises auf die Patenterteilung: **20.01.1999**
(21) Anmeldenummer: 96106889.7
(22) Anmeldetag: 02.05.1996
(51) Int. Cl.: B65H 27/00

(54) **Rotierender zylindrischer Körper mit geringer Massenträgheit**
Rotating cylindrical body with low mass inertia
Corps cylindrique tournant avec faible inertie de masse

(30) Priorität: 05.06.1995 US 462496
(43) Veröffentlichungstag der Anmeldung: 11.12.1996
(73) Patentinhaber: Heidelberger Druckmaschinen Aktiengesellschaft, 69115 Heidelberg (DE)
(72) Erfinder: Argiros, James Michael, Dover, NH 03820 (US)
(74) Vertreter: Fey, Hans-Jürgen

(56) Entgegenhaltungen:
- EP-A- 0 451 890
- WO-A-91/06499
- DD-A- 124 788
- DE-A- 4 418 549
- DE-U- 9 314 568
- GB-A- 1 430 286
- GB-A- 2 073 850
- US-A- 3 654 050
- PATENT ABSTRACTS OF JAPAN vol. 10, no. 360 (M-541) [2417] , 3.Dezember 1986 & JP 61 155154 A (TOSHIBA), 14.Juli 1986,

## Beschreibung

Die vorliegende Erfindung bezieht sich auf einen rotierenden zylindrischen Körper mit geringer Massenträgheit, insbesondere für den Einsatz in Rotationsdruckmaschinen.

US 4,903,597 beschreibt Druckplattenhülsen sowie Verfahren zum Anbauen und Abbauen derselben. Eine endlose, zylindrische Druckplattenhülse ist vorgesehen, die bei einem komplementären zylindrischen Druckzylinder auf einfache Art und Weise axial angebaut und abgebaut werden kann. Der Druckzylinder ist hohl und sein Innenraum dient als eine Druckluftkammer. Der Zylinder besitzt ein zylindrisches Rohr mit luftdichten Abschlußplatten. In dem Rohr sind eine Vielzahl von im Abstand voneinander angeordneten, sich radial erstreckenden Öffnungen vorgesehen, durch die Luft aus der Kammer zum Aufweiten der Hülse während des Anbauens und Abbauens strömen kann.

Die EP 0 451 890 A1, die dem oberbegriff des Anspruchs 1 entspricht, offenbart eine Walze und ein Verfahren zum Herstellen der Walze. Ein zylindrisches Metallwalzengehäuse ist bezüglich der Walzenachse zentriert. Das Gehäuse, eine dünne elektrolytische geformte Hülse, ist durch Lagerzapfen zentriert, und ein Füllstoff geringer Dichte wird in das Gehäuse eingebracht. Der Füllstoff geringer Dichte verleiht dem Rollengehäuse d.h. der elektrolytisch geformten Buchse, Steifigkeit.

Es soll ein rotierender zylinderrischer Körper mit geringer Massenträgheit und aus reichender Steifigkeit hergestellt werden. Dies wird duch einen rotierenden zylindrischen Körper gemäß Anspruch 1 und einem verfahren zum Herstellen gemäß Anspruch 18 erreicht.

Die Verschlußkappen können aus einem geschichteten Verbundwerkstoff bestehen. Alternativ können die Verschlußkappen aus Metall, wie beispielsweise Aluminium, gefertigt werden. Der zylindrische Körper und die Verschlußkappen können Verstärkungselemente beinhalten. können ringförmige Elemente besitzen, die in den Innenhohlraum des zylindrischen Körpers eingesetzt sind. Ein anderes Verstärkungsmittel ist ein Vorspann- oder Druckvorspannstab, der den Innenhohlraum des zylindrischen Körpers zum Verbessern der Biegesteifigkeit überspannt. Der Vorspann- oder Druckvorspannstab geht vorzugweise durch eine Mittellinie des zylindrischen Körpers. Ringförmige Elemente, die über die Breite des zylindrischen Körpers verteilt angeordnet sind, können ebenfalls zum Verbessern der Biegesteifigkeit benutzt werden.

Die Zylinderfläche des zylindrischen Körpers kann ein Nutenmuster mit Winkelversatz gegen die Mittellinie des zylindrischen Körpers aufweisen. Das Nutenmuster ermöglicht das Beseitigen eines Luftlagers oder Luftfilms zwischen der Materialbahn und der Walzen-oder Rollenoberfläche.

Der Verbundwerkstoff kann beispielsweise aus einem geschichteten Material oder Fiberglas bestehen. Weiterhin ist es vorstellbar, eine kohlenstoffgefüllte oder kohlenstoffenthaltende Lage oder Schicht innerhalb einer geschichteten Struktur des Verbundwerkstoffs einzuschließen. Der geschichtete Verbundwerkstoff kann beispielsweise Stränge, Fäden, Schnüre, Gewebe, Geflecht, Drähte, Zylinder oder Harze einschließen.

Zur Veranschaulichung sei erwähnt, daß die Verbundwerkstoffe zwischen Harzlagen laminierte Glasfaser- oder Fiberglasstränge sein können. Als Harz kann beispielsweise Epoxidharz oder Polyesterharz verwendet werden. Die Stränge können auch aus Kohlenstoffasern und/oder Graphit anstelle von Glas bestehen.

Alternativ kann der Verbundwerkstoff aus in Harz eingebetteten Wickelschnüren bestehen. Die Schnüre können Faserglas-, Kohlenstoffaser- und/oder Graphitschnüre sein.

Der Verbundwerkstoff kann auch aus einem zwischen Harzlagen laminierten Metallzylinder bestehen.
Der Innenhohlraum des zylindrischen Körpers kann mit Gas, Schaumstoff, Flüssigkeit oder einem Flüssigkeitsgemisch druckbeaufschlagt werden. Brauchbare Gase sind beispielsweise Luft, Kohlendioxid, Helium oder irgendein anderes unbrennbares Gas. Brauchbare Schaumstoffe sind beispielsweise Expansionsschäume und Strukturschäume. Brauchbare Flüssigkeiten sind beispielsweise Wasser, Öle, Kühlmittel etc., und Beispiele für brauchbare Flüssigkeitsgemische sind Wasser/Glykol-, Wasser/Öl- und Öl/Öl-Gemische.

Die vorliegende Erfindung wird in der folgenden Beschreibung eines bevorzugten Ausführungsbeispiels im Zusammenhang mit den beigefügten, nachstehend erklärten Zeichnungen näher erläutert.

Es zeigen:
- Fig. 1: einen zylindrischen Körper mit geringer Massenträgheit gemäß der vorliegenden Erfindung, der Verschlußkappen mit Lagerzapfen besitzt;
- Fig. 2: einen zylindrischen Körper mit geringer Massenträgheit gemäß der vorliegenden Erfindung, der Verschlußkappen mit Naben besitzt;
- Fig. 3: eine Veranschaulichung des Verfahrens, nach dem ein rotierender zylindrischer Körper mit geringer Massenträgheit gemäß der vorliegenden Erfindung hergestellt werden kann;
- Fig. 4: das Verfahren, nach dem längsliegende Stränge in den rotierenden zylindrischen Körper mit geringer Massenträgheit gemäß der vorliegenden Erfindung eingebaut werden können.

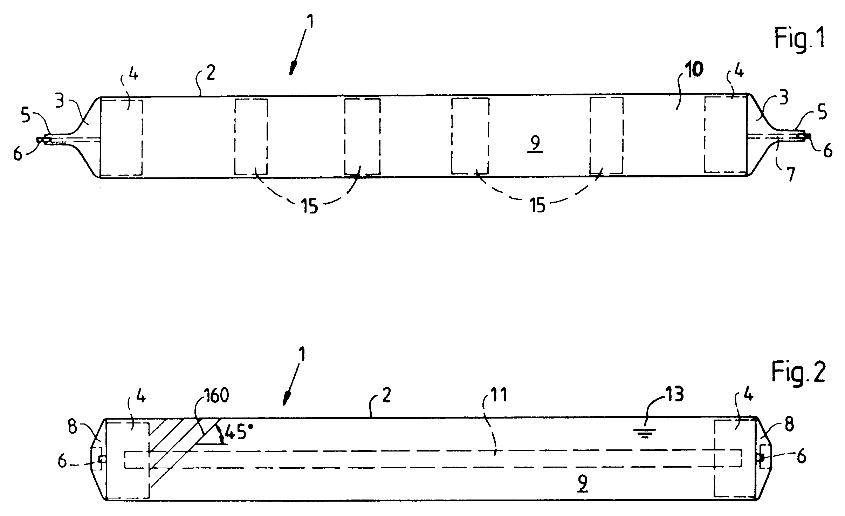

Fig. 1 zeigt einen rotierenden zylindrischen Körper gemäß der vorliegenden Erfindung, der einen dünnwandigen Zylinder mit Verschlußkappen mit Lagerzapfen einschließt.

Gemäß dieser Ausführungsform der vorliegenden Erfindung weist ein zylindrischer Körper 1 eine zylindrische Oberfläche 2 auf. An den entgegengesetzten Enden des zylindrischen Körpers 1 sind Verschlußkappen 3 angeordnet. Die Verschlußkappen 3 haben Lagerzapfen 5 und besitzen jeweils Mediumkanäle 7 zum Verbinden des Innenhohlraums 9 des zylindrischen Körpers 1 mit einer Mediumquelle (nicht gezeigt). Ein Medium 10 kann beispielsweise ein in dem Innenhohlraum 9 des zylindrischen Körpers 1 zu verdichtendes Gas oder ein Schaumstoff sein. Eine Flüssigkeit oder ein Flüssigkeitsgemisch kann ebenfalls durch die Kanäle 7 in den Innenhohlraum 9 geleitet werden.

Brauchbare Gase sind beispielsweise Luft, Kohlendioxid, Helium oder irgendein anderes unbrennbares Gas. Brauchbare Schaumstoffe sind beispielsweise Expansionsschäume und Strukturschäume. Beispiele für brauchbare Flüssigkeiten sind Wasser, Öle, Kühlmittel etc., und Beispiele für brauchbare Flüssigkeitsgemische sind Wasser/Glykol-, Wasser/Öl-und Öl/Öl-Gemische.

Die Verschlußkappen 3 enthalten jeweils Verstärkungsteile 4. Die Verstärkungsteile 4 sind ringförmig gebaut und dienen zum Versteifen der äußeren Enden des zylindrischen Körpers 1. Wie dem Fachkundigen bekannt ist, wird durch Befüllen des Innenhohlraums 9 mit einem Druckmedium 10 die Biegesteifigkeit des zylindrischen Körpers 1 beträchtlich verbessert. Die Druckbeaufschlagung des zylindrischen Körpers 1 ergibt eine Vorspannung des zylindrischen Körpers 1, die die Beständigkeit gegen Biegebelastungen erhöht und dem Beulen und Einknicken der dünnen Wände des zylindrischen Körpers 1 entgegenwirkt. Das Verhältnis zwischen dem Radius des zylindrischen Körpers 1 und den Wänden des zylindrischen Körpers 1 ist gleich oder größer 10:1.

Durch die Verwendung eines Füllstoffs im Innenhohlraum 9 zum Vorspannen der Zylinderfläche 2 des zylindrischen Körpers 1 wird die Massenträgheit des zylindrischen Körpers unter Beibehaltung einer ausreichenden Steifigkeit durch Verringern seiner Masse reduziert. Die Verringerung der Masse des zylindrischen Körpers 1 bedeutet auch eine erhebliche Verringerung der Herstellungskosten.

Der zylindrische Körper 1 hesteht aus einem Verbundwerkstoff. Dieses heißt, daß bei einem Versagen des rotierenden zylindrischen Körpers 1 nur ein Riß in der Zylinderoberfläche 2 entsteht. Im Gegensatz dazu kann das Versagen eines unter Druck stehenden metallischen zylindrischen Körpers dazu führen, daß Metallpartikel absplittern und in den Arbeitsraum geschleudert werden. Dies bedeutet, daß durch Nutzen eines Verbundwerkstoffs Verletzungen von Bedienungspersonen und Schäden an Maschinenteilen in einem Druckwerk verhindert werden.

Der rotierende zylindrische Körper gemäß der vorliegenden Erfindung kann in Druckmaschinen eingesetzt werden. Er eignet sich beispielsweise zum Einsatz in einer Spleißeinheit oder in einer Bahneinzugseinheit mit einem (Meander-) Speicher. Weitere Einsatzmöglichkeiten bestehen in Kühlwalzenständen, einer Wendestangenanordnung, einem Falzapparat oder einer Verschiebe- und Schneideinheit.

Der rotierende zylindrische Körper 1 gemäß der vorliegenden Erfindung kann beispielsweise als verstellbarer Abschneidzylinder in Falzapparaten oder zum Variieren der Spannung benutzt werden. Zusätzlich ist die vorliegende Erfindung in einem Kühlwalzenstand nutzbar, wenn eine Flüssigkeit oder ein Flüssigkeitsgemisch wie Wasser, Wasser/Glykol, Wasser/Alkohol, Öle oder Kühlmittel zum Beaufschlagen des Innenhohlraums 9 des zylindrischen Körpers 1 benutzt wird.

Fig. 1 zeigt, daß die Verschlußkappen 3 ringförmige Verstärkungen 4 besitzen, die in den Innenhohlraum 9 des zylindrischen Körpers 1 an dessen entgegengesetzten Enden eingesetzt sind. Zusätzlich können ringförmige Versteifungsteile 15 im Innenhohlraum 9 über die Breite des zylindrischen Körpers 1 vorgesehen werden. Diese Versteifungsteile 15 verbessern die Steifigkeit der Struktur beträchtlich und sind im Abstand zueinander über die Länge des zylindrischen Körpers 1 angeordnet. Der gleiche Zweck - die Verbesserung der Biegesteifigkeit des zylindrischen Körpers - läßt sich durch Befüllen des Innenhohlraums 9 des zylindrischen Körpers 1 mit einem Schaumstoff erreichen. Die Kanäle 7 für das Medium 10 können mit einem Füllventil oder einem Verschlußstopfen zum Abdichten des Innenhohlraums 9 des zylindrischen Körpers gegen die Umgebung versehen werden.

Fig. 2 zeigt eine weitere Ausführungsform der vorliegenden Erfindung, bei der die Verschlußkappen mit einer Nabe versehen sind. Die Luftkanäle sind genauso wie die in Fig. 1 vorgesehenen. Die Verschlußkappen 8 haben die gleichen Verstärkungsteile 4, wie in Fig. 1 beschrieben. Sie sind mit einer Abdichtvorrichtung 6 ausgestattet, bei der es sich beispielsweise um ein Füllventil oder einen Verschlußstopen handeln kann.

Die Bezugsnummer 13 bezeichnet eine Flüssigkeit, mit der der Innenhohlraum 9 des zylindrischen Körpers 1 in der zweiten Ausführungsform beaufschlagt wird. Zusätzlich ist an der zylindrischen Oberfläche 2 des zylindrischen Körpers 1 ein äußeres Nutenmuster 160 vorgesehen. Das Nutenmuster 160 kann am Umfang des zylindrischen Körpers unter einem Winkel von 45° zu der Mittellinie ausgebildet werden. Durch dieses Nutenmusters 160 werden Luftlager oder Luftfilme zwischen einer Materialbahn und der Oberfläche einer Rolle beseitigt.

Bei den Ausführungsformen nach den Fig. 1 und 2 kann auch ein längs liegender Vorspann-oder Druckvorspannstab 11, wie in Fig. 2 dargestellt, vorgesehen werden. Sein Anschluß an die Verschlußkappen 8 ist nur schematisch gezeigt.

Es versteht sich, daß der Stab 11 in gleicher Weise durch Einschrauben des Stabes 11 in die Verschlußkappen, durch Anschließen des Stabes 11 an die Verschlußkappen mit Stiften, durch Ankleben des Stabes 11 an die Verschlußkappen, durch Anschweißen des Stabes 11 an die Verschlußkappen oder auf irgendene andere geeignete Art mit den Verschlußkappen verbunden werden kann. Bei Verschrauben des Stabes 11 mit den Verschlußkappen durch auf den Stab geschraubte Muttern ragen die Stabenden durch den Luftkanal über die Verschlußkappen hinaus nach außen.

Der Vorspann- oder Druckvorspannstab 11 erstreckt sich durch die Mittellinie des zylindrischen Körpers 1. Er verbessert die Biegesteifigkeit des zylindrischen Körpers 1. Der Vorspann- oder Druckvorspannstab 11 kann aus jedem geeigneten Werkstoff bestehen, beispielsweise aus Stahl.

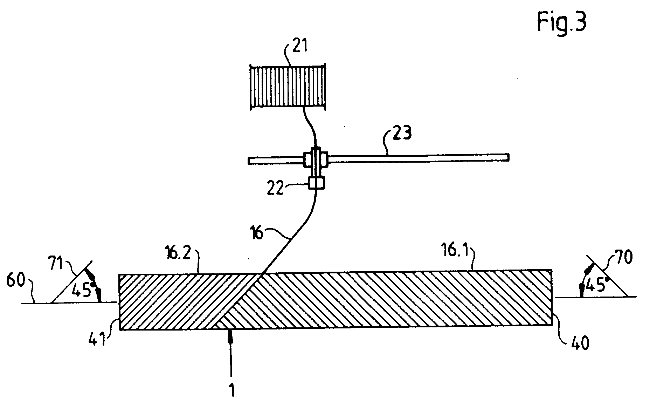

Wie Fig. 3 zeigt, kann bei der Herstellung des zylindrischen Körpers dessen Steifigkeit dadurch verbessert werden, daß der Körper mit Strängen 16 aus Fiberglas oder anderem Faserwerkstoff kreuzförmig unter Winkeln von 45° zur Mittellinie 60 bewickelt wird. Das Bewickeln beginnt von jedem Ende des zylindrischen Körpers aus, um dessen Biegefestigkeit zu erhöhen. Das Wickeln der Stränge erfolgt mit herkömmlichen Wickelmethoden.

Beispielsweise trägt eine Aufgabespule 21 aufgewickelte Stränge 16. Der Strang 16 wird über eine Führung 22 an einer Führungsstange 23 zugeführt. Der zylindrische Körper 1 ist an einer Vorrichtung (nicht gezeigt) drehbar angebracht. Beim Drehen des zylindrischen Körpers 1 um die Zylindermittellinie 60 wird der Strang 16 von der Aufgabespule 21 über die Führung 22 abgezogen und an den zylindrischen Körper chemisch gebunden, beispielsweise mit Harz. Beim Wickeln des Stranges um den rotierenden zylindrischen Körpers 1 wird die Führung 22 entlang der Führungsstange 23 axial mit einer solchen Geschwindigkeit bewegt, daß sich eine 45° Winkelung um den rotierenden zylindrischen Körper 1, ergibt. Nachdem eine erste Lage von Wicklungen 16.1 von dem ersten Ende 40 des zylindrischen Körpers 1 aus zum Bilden einer 45-Grad-Wicklung 70 aufgebracht worden ist, wird der Vorgang beginnend bei dem zweiten Ende 41 wiederholt, um eine zweite Lage von Wicklungen 16.2 mit entgegengesetztem 45-Grad-Wicklungsschlag 71 zu bilden.

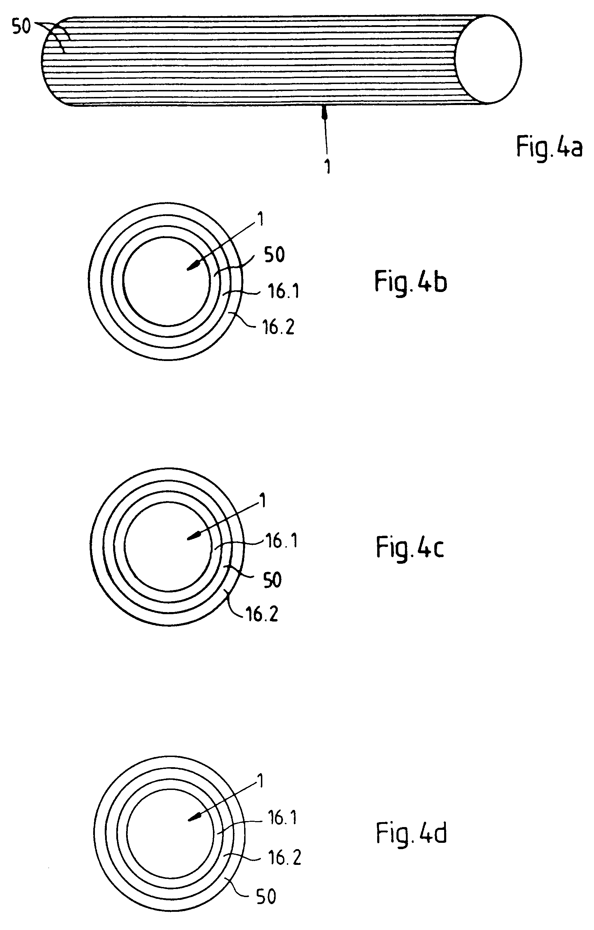

Zusätzlich werden, wie in Fig. 4(a) gezeigt, längs liegende Stränge 50 aus Faserglas oder einem anderen Fasermaterial, z.B. Kohlenstoffasern, die während der Herstellung des zylindrischen Körpers gespannt gehalten werden, zum Verbessern der Biegefestigkeit gegen einwirkende Lasten benutzt.

Die längs liegenden Stränge 50 können nach jedem geeigneten Verfahren angebracht werden. Die längs liegenden Stränge 50 können beispielsweise an Ringen an jedem Ende des Zylinders 1 befestigt werden. Danach können die Ringe während der Herstellung gezogen werden, so daß die längs liegenden Stränge 50 während des Herstellungsprozesses unter Spannung gehalten werden.

Alternativ kann jeder längs liegende Strang 50 an Wickeltrommeln oder Wickelzylindern angeschlossen werden (verfahrensmäßig ähnlich wie die Montage von Gitarrensaiten) und während der Herstellung gespannt gehalten werden.

Gemäß der vorliegenden Erfindung können die längs liegenden Stränge 50 unter den Wicklungslagen 16.1, 16.2, wie in Fig. 4(b) gezeigt, zwischen zwei Wicklungslagen 16.1. 16.2, wie in Fig. 4(c) gezeigt oder über den Wicklungslagen 16.1, 16.2, wie in Fig. 4(d) gezeigt aufgebracht werden.

### BEZUGSZEICHENLISTE

- 1: Zylindrischer Körper
- 2: Zylindrische Oberfläche, Zylinderoberfläche
- 3: Verschlußkappe
- 4: Verstärkungsteil, Verstärkungselement, ringförmig
- 5: Lagerzapfen
- 6: Abdichtvorrichtung
- 7: Mediumkanal
- 8: Verschlußkappe
- 9: Innenhohlraum
- 10: Medium, Druckmedium
- 11: Vorspannstab, Druckvorspannstab
- 13: Flüssigkeit
- 15: Versteifungsteile, ringförmig
- 16: Strang
- 16.1: Erste Lage von Wicklungen
- 16.2: Zweite Lage von Wicklungen
- 21: Aufgabespule
- 22: Führung
- 23: Führungsstange
- 40: Erstes Ende
- 41: Zweites Ende
- 50: Strang, längs liegend
- 60: Zylindermittellinie
- 70: 45-Grad-Wicklung
- 71: 45-Grad-Wicklung, entgegengesetzt
- 160: Nutenmuster, äußeres

## Patentansprüche

1. Rotierender zylindrischer Körper mit geringer Massenträgheit, der einen zylindrischen Körper (1) aus Verbundwerkstoff mit einer geringen Wandstärke und einem großen Länge/Durchmesser-Verhältnis umfaßt und der einen durch ein Paar Verschlußkappen (3) abgedichteten Innenhohlraum (9) besitzt, in den ein Druckmedium (10, 13) eingebracht ist,
**dadurch gekennzeichnet**,
daß der Verbundwerkstoff durch vorgespannte, in Längsrichtung des Körpers verlaufende Stränge (50) zur Verbesserung der Biegesteifigkeit verstärkt ist, die während der Herstellung des zylindrischen Körpers (1) gespannt gehalten werden.

2. Rotierender zylindrischer Körper nach Anspruch 1,
**dadurch gekennzeichnet**,
daß die Verschlußkappen (3) einen Verbundwerkstoff umfassen.

3. Rotierender zylindrischer Körper nach Anspruch 1 oder 2,
**dadurch gekennzeichnet**,
daß innerhalb des zylindrischen Körpers (1) angeordnete Verstärkungselemente (11, 15) vorgesehen sind.

4. Rotierender zylindrischer Körper nach einem der vorhergehenden Ansprüche,
**dadurch gekennzeichnet**,
daß innerhalb der Verschlußkappen (3) angeordnete Verstärkungselemente (4) vorgesehen sind.

5. Rotierender zylindrischer Körper nach Anspruch 3 oder 4,
**dadurch gekennzeichnet**,
daß die Verstärkungselemente (15, 4) ringförmig sind.

6. Rotierender zylindrischer Körper nach einem der Ansprüche 3 bis 5,
**dadurch gekennzeichnet**,
daß die Verstärkungselemente einen Vorspannstab (11) zur Verbesserung der Biegesteifigkeit umfassen.

7. Rotierender zylindrischer Körper nach Anspruch 6,
**dadurch gekennzeichnet**,
daß sich der Vorspannstab (11) durch eine Mittellinie des zylindrischen Körpers (1) erstreckt.

8. Rotierender zylindrischer Körper nach einem der Ansprüche 3 bis 7,
**dadurch gekennzeichnet**,
daß die Verstärkungselemente aus einer Vielzahl von ringförmigen Elementen (15) bestehen, die im Abstand zueinander über die Länge des zylindrischen Körpers (1) angeordnet sind.

9. Rotierender zylindrischer Körper nach einem der vorhergehenden Ansprüche,
**dadurch gekennzeichnet**,
daß die Außenfläche des zylindrischen Körpers (1) mit einem Nutenmuster versehen ist.

10. Rotierender zylindrischer Körper nach einem der vorhergehenden Ansprüche,
**dadurch gekennzeichnet**,
daß der Verbundwerkstoff Fiberglas ist.

11. Rotierender zylindrischer Körper nach einem der vorhergehenden Ansprüche,
**dadurch gekennzeichnet**,
daß der Verbundwerkstoff eine kohlenstoffhaltige Lage einschließt.

12. Rotierender zylindrischer Körper nach einem der vorhergehenden Ansprüche,
**dadurch gekennzeichnet**,
daß das Druckmedium ein Gas, ein Schaumstoff, eine Flüssigkeit (13) oder ein Flüssigkeitsgemisch ist.

13. Verfahren zum Herstellen eines rotierenden zylindrischen Körpers, welches die folgenden Schritte umfaßt:
(a) Wickeln eines ersten Stranges eines Fasermaterials um einen zylindrischen Körper von einem ersten Ende des zylindrischen Körpers aus mit einer Wickelorientierung von ungefähr 45° zur Mittellinie des zylindrischen Körpers;
(b) Wickeln eines zweiten Stranges eines Fasermaterials um einen zylindrischen Körper von einem zweiten Ende des zylindrischen Körpers aus mit einer Wickelorientierung von ungefähr 45° zu einer Mittellinie des zylindrischen Körpers, um zusammen mit dem ersten Strang ein Kreuzmuster zu erzielen; wobei zur Verbesserung der Biegesteifigkeit des zylindrischen Körpers längsliegende Stränge aus Fasermaterial Anwendung finden, die während der Herstellung des zylindrischen Körpers gespannt werden.
(c) Montieren einer Verschlußkappe an jedem Ende des zylindrischen Körpers zum Abdichten eines Innenhohlraums des zylindrischen Körpers;
(d) Einbringen eines Druckmediums in den Innenhohlraum des zylindrischen Körpers.

14. Verfahren nach Anspruch 13,
**dadurch gekennzeichnet**,
daß die längsliegenden Stränge Kohlenstoffaserstränge sind.

15. Verfahren nach Anspruch 13,
**dadurch gekennzeichnet**,
daß die längsliegenden Stränge Glasfaserstränge sind.

16. Verfahren nach Anspruch 13,
**dadurch gekennzeichnet**,
daß die längsliegenden Stränge Stahldrahtstränge sind.

17. Verfahren nach einem der Ansprüche 13 bis 16,
**dadurch gekennzeichnet,**
daß die längsliegenden Stränge vor dem Schritt (a) aufgebracht werden.

18. Verfahren nach einem der Ansprüche 13 bis 16,
**dadurch gekennzeichnet**,
daß die längsliegenden Stränge vor dem Schritt (b) aufgebracht werden.

19. Verfahren nach einem der Ansprüche 13 bis 16,
**dadurch gekennzeichnet**,
daß die längsliegenden Stränge vor dem Schritt (c) aufgebracht werden.

## Claims

1. Rotating, cylindrical body which is of low inertia, comprises a cylindrical body (1) made of a composite having a low wall thickness and a large length/diameter ratio, and which has an interior cavity (9) which is sealed off by a pair of closure caps (3) and into which a pressure medium (10, 13) is introduced, characterized in that to improve the flexural rigidity, the composite is reinforced by pretensioned strands (50) which run in the longitudinal direction of the body and are kept tensioned during production of the cylindrical body (1).

2. Rotating, cylindrical body according to Claim 1, characterized in that the closure caps (3) are made of a composite.

3. Rotating, cylindrical body according to Claim 1 or 2, characterized in that reinforcing elements (11, 15) arranged within the cylindrical body (1) are provided.

4. Rotating, cylindrical body according to one of the preceding claims, characterized in that reinforcing elements (4) arranged within the closure caps (3) are provided.

5. Rotating, cylindrical body according to Claim 3 or 4, characterized in that the reinforcing elements (15, 4) are annular.

6. Rotating, cylindrical body according to one of Claims 3 to 5, characterized in that to improve the flexural rigidity, the reinforcing elements include a pretensioned rod (11).

7. Rotating, cylindrical body according to Claim 6, characterized in that the pretensioned rod (11) extends through a centre line of the cylindrical body (1).

8. Rotating, cylindrical body according to one of Claims 3 to 7, characterized in that the reinforcing elements consist of a multiplicity of annular elements (15) which are arranged at a distance from one another over the length of the cylindrical body (1).

9. Rotating, cylindrical body according to one of the preceding claims, characterized in that the external surface of the cylindrical body (1) is provided with a grooved pattern.

10. Rotating, cylindrical body according to one of the preceding claims, characterized in that the composite is fibre glass.

11. Rotating, cylindrical body according to one of the preceding claims, characterized in that the composite includes a carbon-containing layer.

12. Rotating, cylindrical body according to one of the preceding claims, characterized in that the pressure medium is a gas, a foam, a liquid (13) or a liquid mixture.

13. Method for the production of a rotating, cylindrical body, which method comprises the following steps:
(a) winding a first strand of a fibre material around a cylindrical body, starting from a first end of the cylindrical body, with a winding orientation of approximately 45° with respect to the centre line of the cylindrical body;
(b) winding a second strand of a fibre material around a cylindrical body, starting from a second end of the cylindrical body, with a winding orientation of approximately 45° with respect to a centre line of the cylindrical body, in order to obtain a cross pattern together with the first strand; to improve the flexural rigidity of the cylindrical body, use is made of lengthwise strands of fibre material which are tensioned during production of the cylindrical body;
(c) mounting a closure cap on each end of the cylindrical body to seal off an internal cavity of the cylindrical body;
(d) introducing a pressure medium into the internal cavity of the cylindrical body.

14. Method according to Claim 13, characterized in that the lengthwise strands are carbon-fibre strands.

15. Method according to Claim 13, characterized in that the lengthwise strands are glass-fibre strands.

16. Method according to Claim 13, characterized in that the lengthwise strands are steel-wire strands.

17. Method according to one of Claims 13 to 16, characterized in that the lengthwise strands are applied before step (a).

18. Method according to one of Claims 13 to 16, characterized in that the lengthwise strands are applied before step (b).

19. Method according to one of Claims 13 to 16, characterized in that the lengthwise strands are applied before step (c).

## Revendications

1. Corps cylindrique tournant avec faible inertie de masse, qui comprend un corps cylindrique (1) en matériau composite muni d'une faible épaisseur de paroi et présentant un rapport longueur/diamètre important et qui possède un creux intérieur (9) rendu étanche par une paire de capuchons d' étanchéité (3), dans lequel est introduit un milieu sous pression (10, 13), caractérisé en ce que le matériau composite est renforcé par des brins (50) prétendus s'étendant dans le sens de la longueur du corps afin d'améliorer la rigidité en flexion, lesquels sont maintenus à l'état tendu lors de la fabrication du corps cylindrique (1).

2. Corps cylindrique tournant selon la revendication 1, caractérisé en ce que les capuchons d'étanchéité (3) comprennent un matériau composite.

3. Corps cylindrique tournant selon la revendication 1 ou 2, caractérisé en ce qu'à l'intérieur du corps cylindrique (1) est prévu un agencement d'éléments de renfort (11, 15).

4. Corps cylindrique tournant selon l'une quelconque des revendications précédentes, caractérisé en ce qu'à l'intérieur des capuchons d'étanchéité (3) est prévu un agencement d'éléments de renfort (4).

5. Corps cylindrique tournant selon la revendication 3 ou 4, caractérisé en ce que les éléments de renfort (15, 4) sont de forme annulaire.

6. Corps cylindrique tournant selon les revendications 3 à 5, caractérisé en ce que les éléments de renfort comprennent une tige de prétension (11) pour améliorer la rigidité en flexion.

7. Corps cylindrique tournant selon la revendication 6, caractérisé en ce que la tige de prétension (11) s'étend par la ligne médiane du corps cylindrique (1).

8. Corps cylindrique tournant selon l'une quelconque des revendications 3 à 7, caractérisé en ce que les éléments de renfort se composent d'un grand nombre d'éléments annulaires (15) qui sont agencés à une certaine distance les uns des autres tout le long du corps cylindrique (1).

9. Corps cylindrique tournant selon l'une quelconque des revendications précédentes, caractérisé en ce que la surface extérieure du corps cylindrique (1) présente un profil rainuré.

10. Corps cylindrique tournant selon l'une quelconque des revendications précédentes, caractérisé en ce que le matériau composite est de la fibre de verre.

11. Corps cylindrique tournant selon l'une quelconque des revendications précédentes, caractérisé en ce que le matériau composite contient une couche à base de carbone.

12. Corps cylindrique tournant selon l'une quelconque des revendications précédentes, caractérisé en ce que le milieu sous pression est un gaz, une mousse, un liquide (13) ou un mélange liquide.

13. Procédé de fabrication d'un corps cylindrique tournant, lequel comprend les étapes consistant à :
(a) enrouler un premier brin d'un matériau fibreux autour d'un corps cylindrique à partir d'une première extrémité du corps cylindrique avec une orientation d'enroulement de 45° environ par rapport à la ligne médiane du corps cylindrique ;
(b) enrouler un deuxième brin d'un matériau fibreux autour d'un corps cylindrique à partir d'une deuxième extrémité du corps cylindrique avec une orientation d'enroulement d'environ 45° par rapport à la ligne médiane du corps cylindrique afin de réaliser conjointement avec le deuxième brin un modèle en croix ; les brins s'étendant dans le sens de la longueur qui sont tendus lors de la fabrication du corps cylindrique étant utilisés pour améliorer la rigidité en flexion du corps cylindrique ;
(c) monter un capuchon d'étanchéité à chaque extrémité du corps cylindrique pour rendre étanche le creux intérieur du corps cylindrique ;
(d) introduire un milieu sous pression dans le creux intérieur du corps cylindrique.

14. Procédé selon la revendication 13, caractérisé en ce que les brins s'étendant dans le sens de la longueur sont des brins de fibre de carbone.

15. Procédé selon la revendication 13, caractérisé en ce que les brins s'étendant dans le sens de la longueur sont des brins de fibre de verre.

16. Procédé selon la revendication 13, caractérisé en ce que les brins s'étendant dans le sens de la longueur sont des brins de fil d'acier.

17. Procédé selon l'une des revendications 13 à 16, caractérisé en ce que les brins s'étendant dans le sens de la longueur sont appliqués avant l'étape (a).

18. Procédé selon l'une des revendications 13 à 16, caractérisé en ce que les brins s'étendant dans le sens de la longueur sont appliqués avant l'étape (b).

19. Procédé selon l'une des revendications 13 à 16, caractérisé en ce que les brins s'étendant dans le sens de la longueur sont appliqués avant l'étape (c).
